# EUROPEAN PATENT SPECIFICATION

(11) **EP 1 600 274 B1**
(45) Date of publication and mention of the grant of the patent: **29.08.2007**
(21) Application number: 05006104.3
(22) Date of filing: 21.03.2005
(51) Int. Cl.: B29C 45/14, B29C 45/72, B29L 23/00, B29C 35/16

(54) **Method and apparatus for moulding a rubber pipe joint on a plastic hose**
Verfahren und Vorrichtung zum Spritzgießen einer Gummirohrverbindung auf einen Kunststoffschlauch
Procédé et appareil pour mouler un joint en caoutchouc sur un tuyau en plastique

(30) Priority: 28.05.2004 IT MI20041090
(43) Date of publication of application: 30.11.2005
(73) Proprietor: Meccanica Finnord S.P.a., 21016 Luino (VA) (IT)
(72) Inventor: Piccinali, Eugenio, 21016 Luino (VA) (IT)
(74) Representative: La Ciura, Salvatore

(56) References cited:
- WO-A-97/28953
- FR-A- 2 500 370
- PATENT ABSTRACTS OF JAPAN vol. 018, no. 666 (M-1724), 15 December 1994 (1994-12-15) & JP 06 262640 A (TOYODA GOSEI CO LTD), 20 September 1994 (1994-09-20)
- PATENT ABSTRACTS OF JAPAN vol. 2000, no. 11, 3 January 2001 (2001-01-03) & JP 2000 225629 A (ASAHI CHEM IND CO LTD), 15 August 2000 (2000-08-15)

## Description

This invention proposes a method and the apparatus thereof for moulding a rubber pipe joint around the end section of a plastic hose, in particular a sleeve-shaped rubber pipe joint or the like, on a polyamide hose.

These hoses are often used in hydraulic circuits fitted in motor-vehicles, to convey fluid under pressure to parts such as hydraulic clutches or the like.

The said hoses shall have mechanical strength, high temperature strength, satisfactory flexibility, in such a way as to easily fit them into the narrow spaces of the motor-vehicle bonnets, and so on.

According to the state of art, for connecting this kind of hose for example to an oil tank tip, a joint consisting of a plastic or metal tubular element is generally used; the said joint has a saw-tooth outside surface and is fitted into the hose ends and into the rubber sleeve thereof.

The above-mentioned technique implies some disadvantages due to a higher difficulty and complexity of installation, to the use a third element, i.e. the joint, and to the fact that such element is usually stiff and therefore reduces the hose flexibility in the area where it is fitted into.

FR-A-2500370 discloses a method for moulding a rubber pipe joint around the end of a hose made of different material, in which the end part of the hose is inserted on a tubular support, wherein means are provided, for cooling the support by means of a cool air flow which is passed inside the tubular support.

It would be advisable to mould the rubber joint directly on the polyamide hose end sections, but such operation implies several disadvantages which have made this method impossible; such disadvantages derive from the fact that the rubber has a curing temperature higher than 160°C, while the hose polyamide softens at a temperature lower than 160°C; for this reason such technique, at the best of our knowledge, has never been adopted so far.

The above-mentioned drawback can be now overcome by this invention, which proposes a method and the apparatus thereof for moulding a rubber joint directly on a plastic hose, in particular in polyamide, according to which the hose end is fitted on a pin having a length with axial surface grooves, in which a coolant can flow.

The pin with the hose are fitted into a mould which has, nearby the area which tightens the hose, similar ducts where a coolant can flow, in such a way that the entire portion of the hose not involved in the rubber injection moulding is efficiently cooled and kept at a temperature lower than the softening temperature.

Only the end length of the hose, which is not cooled, is raised to a temperature that is close to the softening temperature, but this part of the hose is not subject to deformation, since the hose is fitted on a steel pin which prevents it from bending.

The rubber is injected in the mould cavity around the end length of the hose and when the said rubber is cooled, the mould can be reopened and the hose can be pulled out, on which hose the joint has been directly moulded. The invention is defined by the features of independent method claim 1 and independent apparatus claim 3.

This invention will be now described in detail, by way of example but without any limitation thereto, with reference to the enclosed figures, wherein:

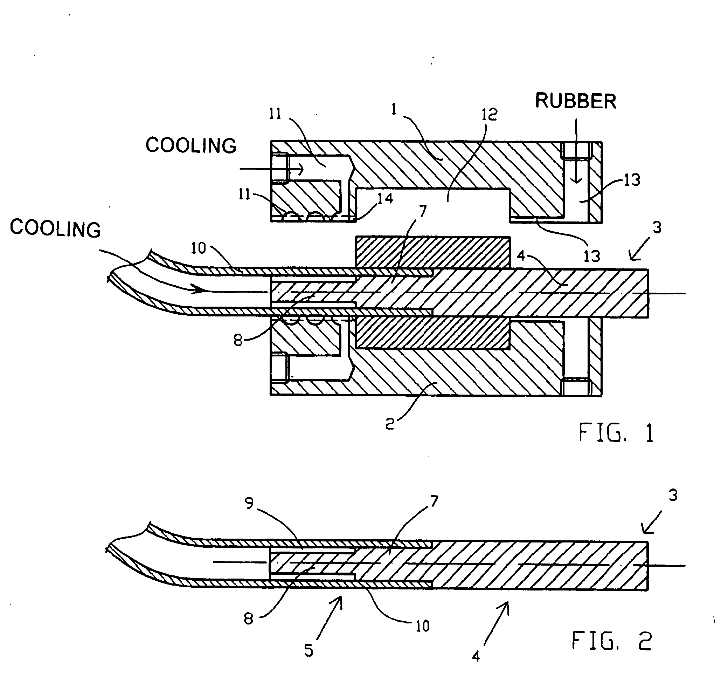

- figure 1 schematically shows a section of a mould for the production of a hose provided with a rubber joint according to the invention;
- figure 2 schematically shows a section of the end of a hose fitted on the mould pin of figure 1.

With reference to the above-mentioned figures, 1 and 2 refer to the two half-moulds which, when they close, create the cavity inside of which the rubber joint is moulded.

Inside this mould a pin 3 is fitted, having a first length 4 with the same diameter as the polyethylene hose and a second length 5 the external diameter of which is equal to the internal diameter of the hose, referred to as 10, on which the joint shall be moulded.

The length 5 of the pin shows a first portion, referred to as 7, filled, which extends over the whoie length, close to which the rubber joint is expected to be moulded. The other side, referred to as 8, shows a plurality of axial surface grooves 9.

The length 5 of the pin is fitted into the polyamide hose and then, through the said hose, cooling air is conveyed and is made flowing along the grooves 9 to cool the hose length, nearby the end which is not involved in the injection of the rubber which shall create the joint.

Inside the two half-moulds (1), (2) additional ducts 11 for the flow of a coolant are fitted, also around the end length of the hose not involved in the injection, this time from the outside.

The two half-moulds (1), (2) close and their cavities create a chamber 12 in which the rubber is injected, which rubber comes from a pipe 13 fitted on one end of the chamber 12.

The air is expelled through an additional duct 14 which is located on the opposite side, in order to avoid the presence of airlocks during the injection.

The following description will explain better also the working of the apparatus.

The hose 10 is fitted on the length of the smaller-diameter pin 5, until it comes into contact with the wall of the larger-diameter length 4.

The mould is then tighten in such a way as to create the rubber injection chamber, around the larger-diameter pin length and around the final end of hose 10, just close to the smaller diameter pin 7, not involved in the grooves.

The cooled air is then made flowing inside the hose, along the grooves 9 of the pin, in order to cool, from the inside, the length of the end of the hose not involved in the injection.

According to the above, when the cool air flows along the ducts 11, the same length of hose end is cooled, from the outside.

Thanks to the aforesaid technique, the heat that should be transmitted from the rubber to the hose during the injection, is quickly lost and the hose, in the area that must not be coated by the sleeve, never reaches the softening temperature.

The molten rubber is injected through the duct 13, until it fills the chamber 12, after having spread, if necessary, a layer of material suitable for helping the rubber adhesion.

The said rubber will fill the chamber 12 where, thanks both to the fact that the temperature can be kept at a rather high level, and thanks to the presence of the adhesion layer, it can perfectly adhere to the end length of the polyamide hose.

The material which covers the hose end is preferably a lacquer able to help the rubber cross-link, for example a lacquer known as "Chemosil".

Once the material which forms the joint is cooled or hardened, it is possible to open the mould and pull the product out simply drawing out the hose with the respective pin joint.

## Claims

1. Method for moulding a rubber pipe joint on a hose (10) made of different materials, whereby cooling the hose length is provided, just close to the end on which the rubber joint is injected, the method comprising the following phases:
- fit the end of the hose on a pin (3) with a first length (4) having the same diameter as the external diameter of the hose, and a second length (5) fitted inside the hose, the said second length (5) having a first portion (7) corresponding to the area on which the joint is injected, with a smooth external surface, and an end portion (8), which, when the hose is fitted, is located in the area not involved in the injection;
- tighten around the hose (10) fitted on the pin (3) a mould shaped in such a way as to create a chamber (12) of injection of the joint, with the said chamber (12) that extends at least over the first pin length (4) and over the pin first portion (7) fitted into the hose **characterized in that** said end portion (8) is provided with surface grooves, with such mould having also grooves and ducts (11) on the surface which is tightened around the length of the hose not involved in the injection;
- make a coolant flow along the said grooves (11) into the mould just close the external surface of the hose (10) and along the said grooves (9) on the end portion of the pin (8);
- inject the material which will create the joint into the chamber that remains limited around the pin and the end of the hose.

2. Method according to the claim 1, **characterised by** the fact to provide for the injection of the rubber just close a side wall of the injection chamber of the joint and the release of the air just close an outlet (14) located on the opposite side of the said chamber.

3. Apparatus for moulding a rubber joint on a plastic hose (10), with the method of claims 1 or 2 having:
- a pin (3) on which the end length of the hose (19) is fitted;
- a mould which is tightened around said pin (3) and the said end length of the hose (10), with the said mould creating an injection chamber (12) of the joint which involves at least part of the said pin (3) and at least an end length of the hose (10);
- means suitable for cooling the internal and external surface of the length of the hose immediately upstream the said end length around which the material that will create the joint is injected, whereby
said pin (3) has a first length (4) having the same external diameter as the external diameter of the hose, a second length (5) having a first portion (7) with the same external diameter as the internal diameter of the hose (10) and a smooth surface and an end portion (8) having the same external diameter as the internal diameter of the hose, with the said end portion (8) having surface grooves (9), additional means being also provided, suitable for making a coolant flow along the said groove (9) during the injection, the apparatus further comprising means suitable for making a coolant flow to cool the external surface of the hose on the surface of the mould which is tightened around the end length of the hose not involved in the injection of the material creating the joint.

## Patentansprüche

1. Verfahren zum Spritzgießen einer Gummirohrverbindung auf einen Schlauch (10), die aus verschiedenen Materialien bestehen, wobei eine Kühlung über das Schlauchstück sehr nahe bei dem Ende, auf das die Gummiverbindung gespritzt wird, vorgesehen ist, wobei das Verfahren die folgenden Schritte umfasst:
- aufbringen des Endes des Schlauches auf einen Stift (3), der ein erstes Stück (4) hat, mit dem gleichen Durchmesser wie der Außendurchmesser des Schlauches, und der ein zweites Stück (5) aufweist, das in dem Schlauch eingebracht ist, besagtes zweites Stück (5) weist einen ersten Teil (7) auf, der dem Bereich entspricht, auf dem die Verbindung aufgespritzt wird, und der eine glatte Außenfläche hat, und ein Endteil (8), der, wenn der Schlauch aufgebracht ist, sich in dem Bereich befindet, der nicht von dem Aufspritzen betroffen ist,
- festmachen einer Form um den auf dem Stift (3) aufgebrachten Schlauch (10), wobei die Form derart ausgebildet ist, dass eine Kammer (12) für das Spritzgießen der Verbindung entsteht, wobei besagte Kammer (12), die sich wenigstens über das erste Stiftstück (4) und über den ersten Stiftteil (7), der in dem Schlauch eingebracht ist, erstreckt, **dadurch gekennzeichnet ist, dass** besagtes Endteil (8) mit Oberflächenrillen versehen ist, wobei eine derartige Form ebenfalls Rillen und Kanäle (11) auf der Oberfläche aufweist, die um das Stück des nicht von dem Spritzgießen betroffenen Schlauches befestigt ist,
- bewirken, dass ein Kühlmittel entlang besagter Rillen (11) in die Form dicht bei der Außenfläche des Schlauches (10) und entlang der besagten Rillen (9) auf dem Endteil (8) des Stiftes fließt,
- einspritzen des Materials, das die Verbindung erzeugt, derart in die Kammer hinein, dass es um den Stift und das Ende des Schlauches begrenzt bleibt.

2. Verfahren gemäß Anspruch 1, durch die Tatsache **gekennzeichnet**, **dass** das Spritzgießen des Gummis dicht bei einer Seitenwand der Einspritzkammer der Verbindung und der Austritt der Luft dicht bei einem Auslass (14), der auf der gegenüberliegenden Seite der besagten Kammer sich befindet, erfolgt.

3. Vorrichtung zum Spritzgießen einer Gummiverbindung auf einen Kunststoffschlauch (10) durch das Verfahrens nach den Ansprüchen 1 oder 2, umfassend:
- einen Stift (3), auf dem das Endstück des Schlauches (10) aufgebracht ist,
- eine Form, die um besagten Stift (3) und das besagte Endstück des Schlauches (10) befestigt ist, wobei die besagte Form eine Einspritzkammer (12) der Verbindung bildet, die zumindest einen Teil des besagten Stifts (3) und zumindest ein Endstück des Schlauches (10) einschließt,
- Mittel, das zum Kühlen der Innenfläche und der Außenfläche des Schlauchstückes direkt stromaufwärts des besagten Endstücks, um welches das die Verbindung erzeugende Material eingespritzt wird, geeignet ist, wobei besagter Stift (3) ein erstes Stück (4) hat mit dem gleichen Außendurchmesser wie der Außendurchmesser des Schlauches, und ein zweites Stück (5), das einen ersten Teil (7) von gleichem Außendurchmesser wie der Innendurchmesser des Schlauches (10) aufweist, und eine glatte Oberfläche hat und ein Endteil (8), das den gleichen Außendurchmesser wie der Innendurchmesser des Schlauches aufweist, wobei das besagte Endteil (8) mit Oberflächenrillen (9) versehen ist, außerdem sind zusätzliche Mittel vorgesehen, die geeignet sind, das Kühlmittel entlang der besagten Rillen (9) während des Spritzgießens zum Fließen zu bringen, die Vorrichtung umfasst weiterhin Mittel, die geeignet sind, das Kühlmittel zum Fließen zu bringen, um die Außenfläche des Schlauches auf der Oberfläche der Form zu kühlen, die um das Endstück des Schlauches befestigt ist, das nicht bei dem Spritzgießen des die Verbindung erzeugenden Materials betroffen ist.

## Revendications

1. Procédé de moulage d'un joint en caoutchouc sur un tuyau (10) constitué de différents matériaux, par lequel un refroidissement du tronçon de tuyau est prévu tout près de l'extrémité sur laquelle le joint en caoutchouc est injecté, le procédé comprenant les phases suivantes :
- ajustement de l'extrémité du tuyau sur une broche (3) ayant un premier tronçon (4), qui a le même diamètre que le diamètre extérieur du tuyau, et un deuxième tronçon (5), qui est ajusté à l'intérieur du tuyau, le deuxième tronçon (5) ayant une première partie (7) qui correspond à la région sur laquelle le joint est injecté et qui a une surface extérieure lisse, et une partie d'extrémité (8) qui, lorsque le tuyau est ajusté, se trouve dans la région qui n'est pas impliquée dans l'injection;
- serrage, autour du tuyau (10) ajusté sur la broche (3), d'un moule configuré de façon à créer une chambre (12) d'injection du joint, la chambre (12) s'étendant au moins sur le premier tronçon (4) de la broche et sur la première partie (7) de la broche qui est ajustée dans le tuyau, **caractérisé en ce que** la partie d'extrémité (8) est pourvue de rainures de surface, ce moule ayant également des rainures et des conduites (11) sur la surface qui est serrée autour du tronçon du tuyau qui n'est pas impliquée dans l'injection ;
- faire circuler un fluide de refroidissement le long des rainures (11) formées à l'intérieur du moule, tout près de la surface extérieure du tuyau (10) et le long des rainures (9) formées sur la partie d'extrémité (8) de la broche ;
- injection du matériau qui créera le joint dans la chambre qui reste délimitée autour de la broche et de l'extrémité du tuyau.

2. Procédé selon la revendication 1, **caractérisé par** le fait de prévoir l'injection du caoutchouc tout près d'une paroi latérale de la chambre d'injection du joint et le dégagement de l'air tout près d'un orifice de sortie (14) situé sur le côté opposé de la chambre.

3. Dispositif pour mouler un joint en caoutchouc sur un tuyau en plastique (10) au moyen du procédé selon les revendications 1 ou 2, ayant :
- une broche (3) sur laquelle est ajustée le tronçon d'extrémité du tuyau (19) ;
- un moule qui est serré autour de la broche (3) et du tronçon d'extrémité du tuyau (10), le moule créant une chambre d'injection (12) du joint qui met en jeu au moins une partie de la broche (3) et au moins un tronçon d'extrémité du tuyau (10) ;
- des moyens appropriés pour refroidir la surface intérieure et la surface extérieure du tronçon de tuyau, immédiatement en amont du tronçon d'extrémité autour de laquelle est injecté le matériau qui créera le joint, dans lequel la broche (3) a un premier tronçon (4) dont le diamètre extérieur est identique au diamètre extérieur du tuyau, un deuxième tronçon (5) ayant une première partie (7) dont le diamètre extérieur est identique au diamètre intérieur du tuyau (10) et qui a une surface lisse, et une partie d'extrémité (8) dont le diamètre extérieur est identique au diamètre intérieur du tuyau, la partie d'extrémité (8) ayant des rainures de surface (9), et il est prévu aussi des moyens supplémentaires, propres à faire circuler un fluide de refroidissement le long de la rainure (9) pendant l'injection, le dispositif comprenant, en outre :
- des moyens propres à faire circuler un fluide de refroidissement, de façon à refroidir la surface extérieure du tuyau, sur la surface du moule qui est serrée autour du tronçon d'extrémité du tuyau qui n'est pas impliquée dans l'injection du matériau créant le joint.
